# EUROPÄISCHE PATENTSCHRIFT

(11) **EP 1 045 472 B1**
(45) Veröffentlichungstag und Bekanntmachung des Hinweises auf die Patenterteilung: **21.06.2006**
(21) Anmeldenummer: 00108152.0
(22) Anmeldetag: 13.04.2000
(51) Int. Cl.: H01Q 3/26, H01Q 3/24, H01Q 1/32, H04B 7/08

(54) **Funktelefonanlage mit Gruppenantenne für Fahrzeuge**
Radiotelephone system with antenna array for vehicles
Système radiotéléphonique à réseau d'antennes pour véhicules

(30) Priorität: 14.04.1999 DE 19916855
(43) Veröffentlichungstag der Anmeldung: 18.10.2000
(73) Patentinhaber: FUBA Automotive GmbH & Co. KG, 31162 Bad Salzdetfurth (DE)
(72) Erfinder: Lindenmeier, Heinz, 82152 Planegg (DE); Kronberger, Rainer, 85635 Höhenkirchen (DE); Reiter, Leopold, 82205 Gilching (DE); Hopf, Jochen, 85540 Haar (DE)

(56) Entgegenhaltungen:
- EP-A- 0 568 507
- US-A- 5 784 031
- VAUGHAN R G ET AL: "CIRCULAR ARRAY OF OUTWARD SLOPING MONOPOLES FOR VEHICULAR DIVERSITYANTENNAS" IEEE TRANSACTIONS ON ANTENNAS AND PROPAGATION, IEEE INC. NEW YORK, US, Bd. 36, Nr. 10, Oktober 1988 (1988-10), Seiten 1365-1374, XP001013710 ISSN: 0018-926X
- "COUNTERING MOBILE FADING" ELECTRONICS WORLD AND WIRELESS WORLD, REED BUSINESS PUBLISHING, SUTTON, SURREY, GB, Bd. 95, Nr. 1639, 1. Mai 1989 (1989-05-01), Seiten 528-1, XP000048096 ISSN: 0959-8332
- BARRET M ET AL: "ADAPTIVE ANTENNAS FOR MOBILE COMMUNICATIONS" ELECTRONICS AND COMMUNICATION ENGINEERING JOURNAL, INSTITUTION OF ELECTRICAL ENGINEERS, LONDON, GB, Bd. 6, Nr. 4, 1. August 1994 (1994-08-01), Seiten 203-214, XP000469556 ISSN: 0954-0695

## Beschreibung

Funktelefonanlage für Fahrzeuge mit einer Gruppenantennenanlage 1 mit mehreren Antennenelementen 5 und einem Mobilfunkgerät 2 mit einem Hochfrequenzeingang 14. Fahrzeugantennen für den Mobilfunk (z. B. GSM) als Gruppenantennenanlage 1 sind bekannt aus DE 44 08 744.6 und sind bislang ausschließlich als Antennen mit Rundstrahlcharakteristik konzipiert worden, da dies eine bevorzugte Dimensionierung für eine zeitlich invariante Strahlungscharakteristik für eine permanente Verbindung zwischen Basisstation und dem Mobilfunkteilnehmer im bewegten Fahrzeug darstellt. Typischerweise verwendet man hierfür Antennenelemente, die auf der Heckscheibe als On-Glass-Klebeantennen oder / und auf dem Fahrzeugdach befestigt sind. Bei den elektrisch kurzen Antennenelementen herrscht zwangsweise eine starke Verkopplung zur elektrisch leitenden Fahrzeugkarosserie, so daß durch die gegebene Beeinflussung der Strahlungseigenschaften eine gezielte Gestaltung der Antenneneigenschaften nötig ist. Mit einer zeitlich invarianten Strahlungscharakteristik ist der Nachteil verbunden, daß durch die den Mobilfunk zu fordernde Rundumcharakteristik der Strahlung kein Gewinn durch Strahlungsbündelung, bezogen auf die jeweils vorherrschende Einfallsrichtung der elektromagnetischen Wellen aus Richtung der Feststation ausgenutzt werden kann. Ein Antennengewinn kann somit nur mit Hilfe einer bündelnden Gruppenantenne erzielt werden, deren Hauptempfangsrichtung auf die aktuelle Richtung zur Feststation eingestellt werden kann und während der Fahrt laufend nachgeführt wird. Es hat sich gezeigt, daß auch bei ausgeprägter Bündelung des Strahlungsdiagramms im Empfangsfall durch Mehrwegeausbreitung bedingte Pegeleinbrüche (Fadings) auftreten. Diese wirken sich im Hinblick auf die Signalqualität der empfangenen Nachricht störend aus. Bei digital modulierten Signalen führen diese Pegeleinbrüche und die damit verbundenen Empfangsstörungen zu erhöhten Bitfehlerraten.

Aufgabe der Erfindung ist es deshalb, im bewegten Fahrzeug mit Hilfe einer aufwandsarmen Anordnung sowohl die Empfangsqualität durch erhöhte Bündelung im Strahlungsdiagramm zu verbessern als auch die mit den Pegeleinbrüchen verbundenen Empfangsstörungen zu vermeiden.

Diese Aufgabe wird durch den kennzeichnenden Teil des Anspruchs 1 gelöst.

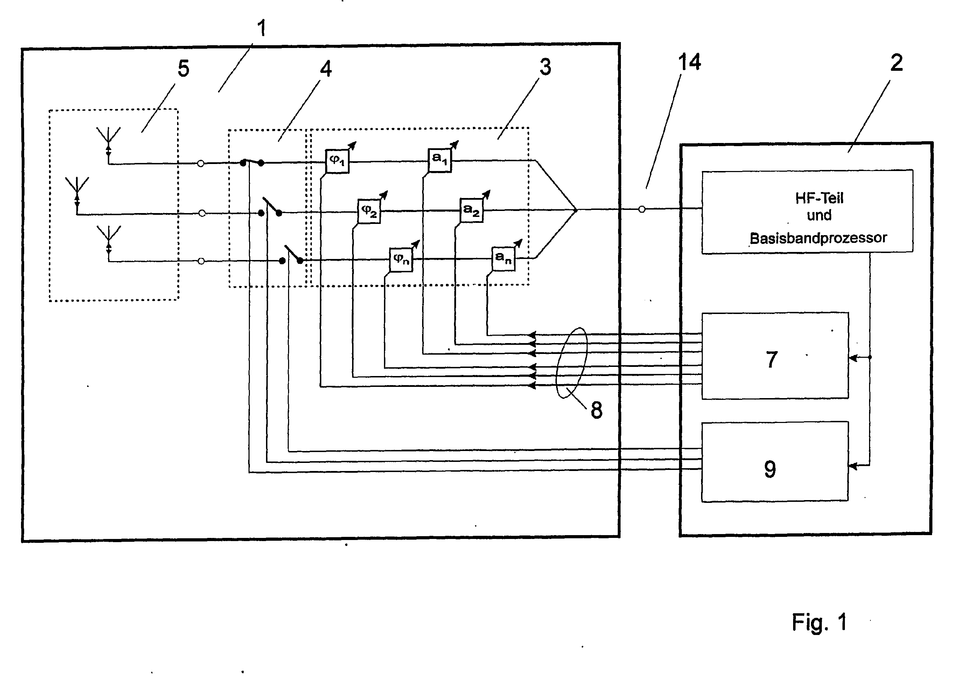

Die Erfindung wird anhand der Figuren 1 mit 5 näher beschrieben. Im einzelnen zeigen die Figuren:
Fig. 1 Funktelefonanlage mit Gruppenantennenanlage 1, Antennenelementen 5 und den dazugehörigen Phasen- bzw. / und Amplituden-Stellgliedern 3 zur Bildung eines nachführbaren Richtdiagramms und den steuerbaren Schaltelementen 4 zur Einstellung der Nachführschaltungskombination 18 bzw. zur Einstellung unterschiedlicher Empfangssignale für Schalterstellungen, die von der Nachführschaltungskombination abweichen. Im Mobilfunkgerät 2 befindet sich der Prozessor zur Nachführung der Hauptempfangsrichtung 7 zur Einstellung der Phasen- bzw. / und Amplituden-Stellglieder 3 und der Diversityprozessor 9 zur Einstellung der steuerbaren Schaltelemente 4.

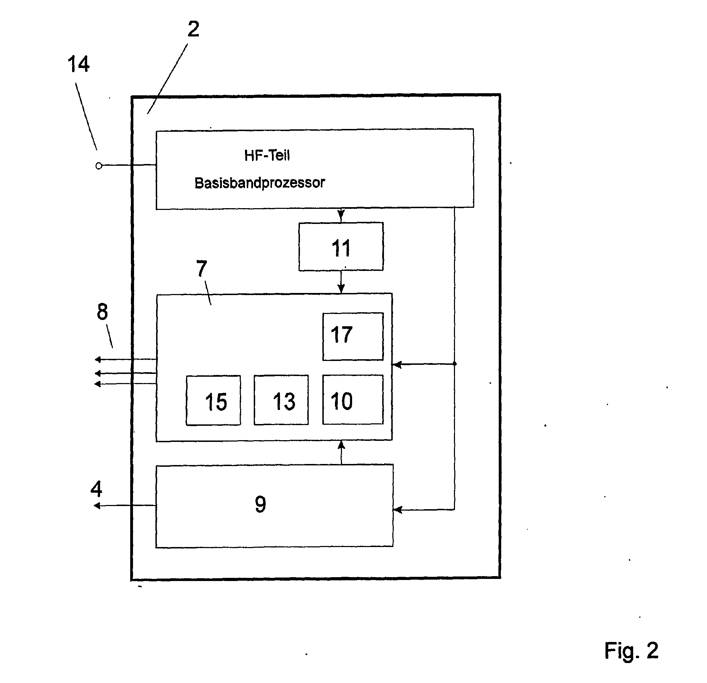

Fig. 2 Mobilfunkgerät 2 mit Hochfrequenzeingang 14 und darin vorhandener Empfangspegelmeßeinrichtung 11 zur Festellung des Hochfrequenzempfangspegels. Im Prozessor zur Nachführung der Hauptempfangsrichtung 7 befinden sich die Regeleinrichtung 17 zur Nachführung der Hauptempfangsrichtung über die Phasen- bzw. / und Amplituden-Stellglieder 3, eine Stoppeinrichtung 13 zum Anhalten des Regelvorgangs der Nachführung und ein Speicher 15 zur Speicherung der Hauptstrahlungsrichtung. Mit Hilfe des Zeitglieds 10 wird bei Fehlen des Nachfübrsignals 8 nach Ablauf einer geeignet gewählten Zeit nach Einstellung der steuerbare Schaltelemente 4 in die Nachführschaltstellungskombination 18 und Einstellung der Phasen- bzw. / und Amplituden- Stellglieder 3 eine Rundstrahlungscharakteristik bewirkt.

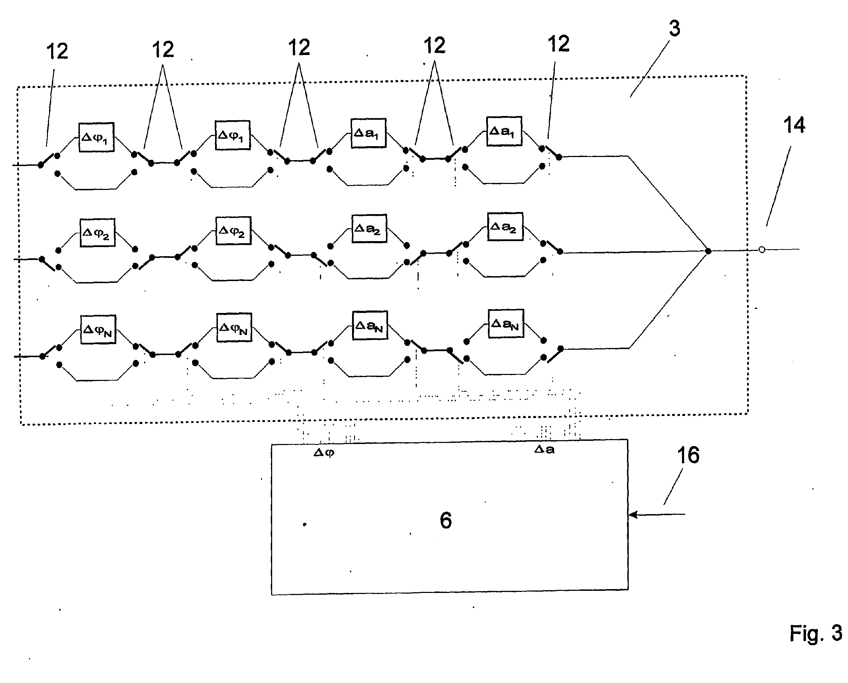

Fig. 3 Prinzipdarstellung von Phasen- bzw. / und Amplituden- Stellgliedern 3, welche fest einstellbar sind, und welche mit Hilfe von Phasen- bzw. / und Amplitudenschaltern 12 unterschiedliche Phasen- und Amplitudeneinstellungen zur Zusammenfassung am Hochfrequenzeingang 14 des Mobilfunkgeräts 2 dienen. Die Ansteuerung erfolgt mit Hilfe des Schaltstellungsprozessors 6, der über eine Steuerleitung 16 vom Prozessor zur Nachführung der Hauptempfangsrichtung 7 gespeist wird.

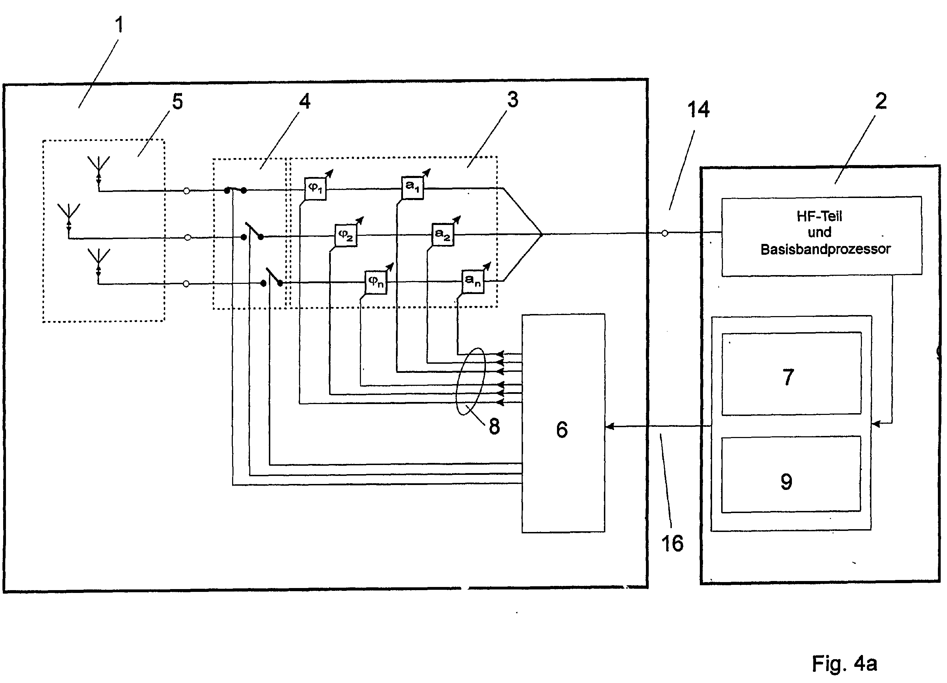

Fig. 4a Gruppenantennenanlage 1 mit einem in einer Baueinheit untergebrachten Schaltstellungsprozessor 6, welcher sowohl die Phasen- bzw. / und Amplituden-Stellglieder 3 zur Bildung des nachgeführten Richtdiagramms ansteuert als auch die steuerbaren Schaltelemente 4 zur Einstellung der Nachführschaltstellungskombination 18 auf verschiedene Schaltstellungen gemäß dem Diversitybetrieb ansteuert.

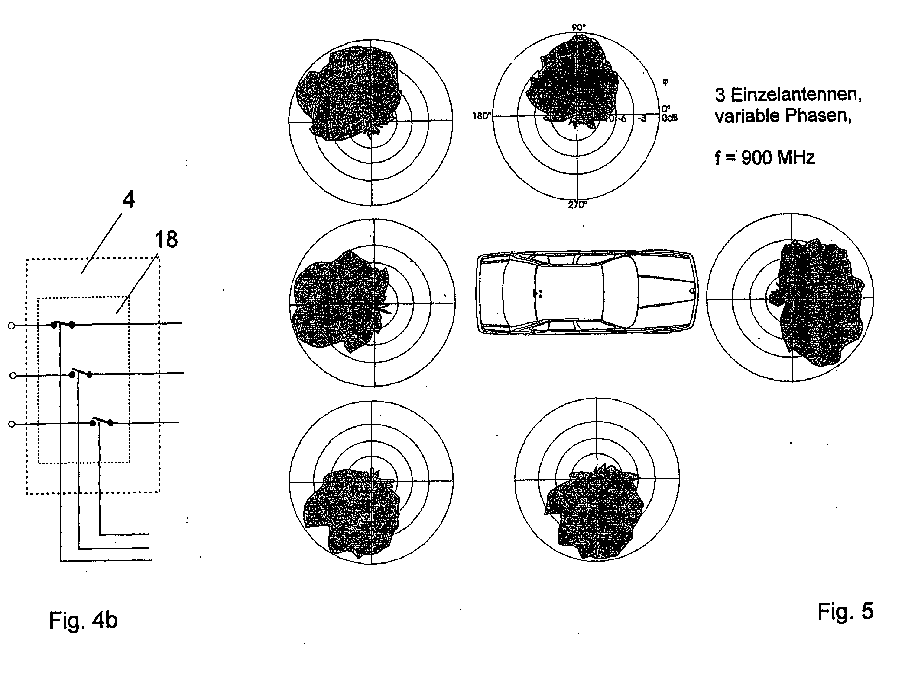

Fig. 4b Nachführschaltstellungskombination 18 der steuerbaren Schaltelemente 4
Fig. 5 Beispiel einer auf dem Fahrzeugdach in der Nähe der hinteren Dachkante angebrachten Gruppenantennenanlage 1 mit drei Antennenelementen 5. Es lassen sich die dargestellten azimutalen Richtdiagramme für verschiedene Einstellungen der Phasen- bzw. / und Amplituden-Stellglieder 3 erreichen.

Die in Fig. 1 dargestellte Grundform einer Funktelefonanlage nach der Erfindung ermöglicht eine kostengünstig erreichbare wesentliche Verbesserung der Funkverbindung zwischen der mobilen Telefonanlage und der Feststation. Die Antennenelemente 5 können z. B. als kurze Stabstrahler mit niedriger Bauhöhe von ca. 30 - 50 mm realisiert werden, die notwendigen Phasen- bzw. / und Amplituden-Stellglieder 3 können in diskreter Form wie in Fig. 3 über Phasen-bzw. / und Amplitudenschalter 12 verschaltet werden und ein Schaltstellungsprozessor 6, welcher mit der Gruppenantennenanlage 1 eine Baueinheit bildet, kann die mit Dioden realisierbaren steuerbaren Schaltelemente 4 und Phasen- bzw. / und Amplitudenschalter 12 ansteuern. Eine entsprechende Steuerleitung 16 steuert den Schaltstellungsprozessor 6 mit Informationen aus dem Prozessor zur Nachführung der Hauptempfangsrichtung 7 und dem Diversityprozessor 9, welche im Mobilfunkgerät 2 untergebracht sind. In diesem einfachen Beispiel wird die Hauptempfangsrichtung durch einen Regel- und Suchvorgang mit Hilfe einer Empfangspegelmeßeinrichtung 11 (Fig. 2), die dem HF-Teil mit Basisbandprozessor zur Feststellung des Pegels am Hochfrequenzeingang 14 des Mobilfunkgerät 2 nachgeschaltet ist, gefunden. Der Regel- und Suchvorgang wird durch entsprechende Gestaltung auf an sich bekannte Weise mit Hilfe des Prozessors zur Nachführung der Hauptempfangsrichtung 7 durchgeführt. In der einfachen Gestaltung der steuerbaren Schaltelemente 4 in Fig. 1 sind zur Erzeugung der bündelnden Strahlungscharakteristik alle steuerbaren Schaltelemente 4 geschlossen und bilden in dieser Stellung die Nachführschaltstellungskombination 18 (Fig. 4b). Diese Schalterstellung wird im Empfangsfall solange beibehalten, bis der Diversityprozessor 9 eine Empfangsstörung in Folge eines Pegeleinbruchs feststellt und mindestens eines der steuerbaren Schaltelemente 4 öffnet. Die Signale der dargestellten drei Signalzweige heben sich somit am Hochfrequenzeingang 14 nicht mehr auf und der Effekt des Fadings verschwindet unter der Bedingung, daß das Antennenelement, dessen steuerbares Schaltelement 4 geöffnet wurde, ein Empfangssignal liefert. Die wechselweise Kombination von Schaltstellungen der steuerbaren Schaltelemente 4 läßt eine Vielzahl von Diversitymöglichkeiten zu, so daß die Wahrscheinlichkeit für ein störungsfreies Signal am Hochfrequenzeingang 14 sehr groß ist. Zweckmäßig wählt man mit Hilfe des Diversityprozessors 9 einen Algorithmus, welcher sukzessive alle Schaltmöglichkeiten bei Auftreten von Störungen überprüft, so daß auch die Nachführschaltstellungskombination 18 in dieser Sequenz enthalten ist.

Weicht die Einstellung der steuerbaren Schaltelemente 4 von der Nachführschaltstellungskombination 18 ab, so ist es vorteilhaft, während dieser Zeit die Einstellung der Phasen- bzw. / und Amplituden-Stellglieder 3 beizubehalten. Mit Hilfe einer Stoppeinrichtung 13, welche vorteilhafter Weise im Prozessor zur Nachführung der Hauptempfangsrichtung 7 enthalten ist und vom Diversityprozessor 9 die Anzeige des Vorliegens einer Empfangsstörung erhält, wird die Regeleinrichtung zur Nachführung der Hauptempfangsrichtung angehalten.

Mit der Erfindung ist der Vorteil verbunden, daß die für den Empfangsfall ausfindig gemachte Hauptempfangsrichtung auch für den Sendefall als Hauptstrahlungsrichtung mit Hilfe der Phasen- bzw. / und Amplituden-Stellglieder 3 eingestellt werden kann. Dies trifft insbesondere auf Mobilfunksysteme mit Zeitduplexverfahren zu, welche in einander abwechselnden Sequenzen zwischen Senden und Empfangen umschalten und sich während der Sende- bzw. Empfangsperioden die relative Position des Fahrzeugs zur Feststation nicht relevant ändert. Bei einem Mobilfunksystem mit Zeitduplexverfahren mit unterschiedlichen Sende- und Empfangsfrequenzen, wie z.B. GSM, können dabei - gesteuert vom Prozessor zur Nachführung der Hauptempfangsrichtung 7 - die Phasen- bzw. / und Amplituden-Stellglieder 3 entsprechend unterschiedlich eingestellt werden.

Die bisher beschriebene Methode zur Ermittlung der Hauptempfangsrichtung erfolgte autonom in der Funktelefonanlage mit Hilfe eines Such- und Regelvorgangs. Bei künftigen Mobilfunksystemen ist es jedoch vorstellbar, daß entweder die Richtung der bei der Feststation einfallenden und von der Mobilstation ausgesendeten Wellen festgestellt werden. Bei Aussendung dieser Richtungsinformation im Datentelegramm könnte diese der Mobilstation zur Einstellung und Nachführung der Hauptempfangsrichtung mitgeteilt werden. Bei Vorhandensein einer heute üblichen Navigationsanlage, welche die Richtung der Fahrzeugorientierung als elektrisches Signal an das Mobilfunkgerät 2 abgibt, könnte die Nachführung der Hauptempfangsrichtung mit Hilfe des Prozessors zur Nachführung der Hauptempfangsrichtung 7 erfolgen. Bei Vorliegen der vollständigen geographischen Position des Fahrzeugs und dessen Orientierung wäre lediglich die Kenntnis der geographischen Position der Feststation notwendig, um den Abstandsvektor zwischen dem Fahrzeug und der Feststation im Prozessor zur Nachführung der Hauptempfangsrichtung 7 zu ermitteln und die Hauptempfangsrichtung entsprechend der Richtung dieses Vektors einzustellen und nachzuführen.

Als Kriterium für Empfangsstörungen kann bei Mobilfunksystemen mit Digitalmodulation die Ritfehlerrate als Maß für die Empfangsqualität dienen. Somit kann bei Überschreiten einer gewissen zulässigen Bitfehlerrate der Diversityprozessor die Umschaltung auf ein jeweils anderes Empfangssignal durch Umschalten der steuerbaren Schaltelemente 4 sukzessive durchführen. Um die Bitfehlerrate festzustellen, ist jedoch zwangsläufig der Verlauf einer nicht geringen Anzahl von Taktzeiten notwendig. Um zu kürzeren Reaktionszeiten des Diversityprozessors zu gelangen, ist es deshalb zweckmäßig, Empfangsstörungen im hochfrequenten bzw. zwischenfrequenten Signal festzustellen. Bei der in modernen Mobilfunknetzen verwendeten Modulationsform des Minimum Shift Keying (MSK) wird der Hochfrequenzträger in aufeinanderfolgenden Bits entsprechend der Digitalmodulation mit einer festen Frequenzabweichung um +- Δf ausgesendet. Bei Auftreten von Empfangsstörungen in frequenzmodulierten Systemen treten Frequenzstörhubspitzen in Verbindung mit Amplitudeneinbrüchen auf. Das gleichzeitige Auftreten dieser Störungsform in der Frequenz und in der Amplitude des Hochfrequenzträgers wird vorzugsweise als ein sehr schnell erkennendes Diversitykriterium eingesetzt. Auf diese Weise kann die Umschaltung auf ein besseres Signal bereits nach wenigen Taktzeiten herbeigeführt werden.

### Liste der Bezeichnungen

Gruppenantennenanlage (1)
Mobilfunkgerät (2)
Phasen- bzw. / und Amplituden- Stellglieder (3)
steuerbare Schaltelemente (4)
Antennenelement (5)
Schaltstellungsprozessor (6)
Prozessor zur Nachführung der Hauptempfangsrichtung (7)
Nachführsignal (8)
Diversityprozessor (9)
Zeitglied (10)
Emptanspegelmeßeinrichtung (11)
Phasen-bzw. / und Amplitudenschalter (12)
Stoppeinrichtung (13)
Hochfrequenzeingang (14)
Speicher (15)
Steuerleitung (16)
Regeleinrichtung (17)
Nachführschaltstellungskombination (18)

## Patentansprüche

1. Funktelefonanlage für Fahrzeuge mit einer Gruppenantennenanlage (1) mit mehreren Antennenelementen (5) und einem Mobilfunkgerät (2) mit einem Hochfrequenzeingang (14), **dadurch gekennzeichnet, daß**
zum Empfang von Funksignalen in der Gruppenantennenanlage (1) steuerbare Phasen- bzw. /und Amplituden-Stellglieder (3) vorhanden und derart eingestellt sind, daß ein gerichteter Empfang mit Hauptempfangsrichtung gegeben ist, und von einem Prozessor zur Nachführung der Hauptempfangsrichtung (7) azimutal in Richtung Feststation mit Hilfe eines Nachführsignals (8) gesteuert sind, und daß in die Signalwege der Gruppenantennenanlage (1) steuerbare Schaltelemente (4) zur Umschaltung von Antennensignalen für Diversityempfang eingebracht sind, derart, daß in einer definierten Nachführschaltstellungskombination (18) der Schaltstellungen der steuerbaren Schaltelemente (4) die Nachführung der azimutalen Hauptempfangsrichtung gegeben ist, daß jedoch mit Änderung der Schaltstellungen der steuerbaren Schaltelemente (4) die Antenneneigenschaften verändert sind und jeweils ein verändertes Empfangssignal am Hochfrequenzeingang (14) des Mobilfünkgeräts (2) vorliegt und ein Diversityprozessor (9) **mit kurzer Reaktionszeit** vorhanden ist, der bei Erkennung einer Empfangsstörung eine andere aus den möglichen Kombinationen von Schaltstellungen auswählt.

2. Funktelefonanlage nach Anspruch 1 für Mobilfunksysteme mit Zeitduplexverfahren **dadurch gekennzeichnet, daß**
während der Sendeperioden der mobilen Funktelefonanlage die steuerbaren Schaltelemente (4) jeweils eine definierte Schaltstellung einnehmen und eine Einstellung der Phasen- bzw. /und Amplituden-Stellglieder (3) der Gruppenantennenanlage (1) derart besteht, daß ein in Bezug auf die Funkverbindung zur Feststation möglichst günstiges Strahlungsdiagramm besteht und die Umschaltung von Sende- auf Empfangsbetrieb und umgekehrt durch die im Mobilfunkgerät vorliegenden Schaltsignale gegeben ist.

3. Funktelefonanlage nach Anspruch 2 für Mobilfunksysteme mit Zeitduplexverfahren
**dadurch gekennzeichnet, daß**
während der Sendeperioden der mobilen Funktelefonanlage eine Einstellung der steuerbaren Schaltelemente (4) und die Einstellung der Phasen- bzw. / und Amplituden-Stellglieder (3) der Gruppenantennenanlage (1) derart besteht, daß ein Strahlungsdiagramm auf der Sendefrequenz der mobilen Funktelefonanlage gebildet ist, dessen Hauptsenderichtung mit der Hauptempfangsrichtung auf der Empfangsfrequenz während der Empfangsperioden identisch ist.

4. Funktelefonanlage nach Anspruch 1 bis 3 für Mobilfunksysteme mit Zeitduplexverfahren
**dadurch gekennzeichnet, daß**
bei Gleichheit von Sende- und Empfangsfrequenz die Einstellung der steuerbaren Schaltelemente (4) und die Einstellung der Phasen- bzw. / und Amplituden-Stellglieder (3) während der Sende- und Empfangsperioden gleich ist.

5. Funktelefonanlage nach Anspruch 1 bis 4
**dadurch gekennzeichnet, daß**
im Fahrzeug eine Einrichtung vorhanden ist, mit deren Hilfe die geographische Position und die Ausrichtung des Fahrzeugs in Form der astronomischen Horizont-Koordinate als elektrisches Signal im Mobilfunkgerät vorliegen und die geographische Position der Feststation durch Übersendung im Datentelegramm der Feststation ebenfalls als elektrisches Signal im Mobilfunkgerät vorliegt und die daraus resultierende optimale azimutale Hauptempfangsrichtung in Relation zur Fahrzeugausrichtung im Prozessor zur Nachführung der Hauptempfangsrichtung (7) aus der Richtung des Entfernungsvektors zwischen den Positionen der Feststation und dem Fahrzeug und der Fahrzeugausrichtung in Form des Nachführsignals (8) vorliegt.

6. Funktelefonanlage nach Anspruch 1 bis 4
**dadurch gekennzeichnet, daß**
im Fahrzeug eine Einrichtung vorhanden ist, mit deren Hilfe die Ausrichtung des Fahrzeugs in Form der astronomischen Horizont-Koordinate als elektrisches Signal im Mobilfunkgerät vorliegt und in der Feststation eine Einrichtung zur Peilung der azimutalen Einfallsrichtung der vom Fahrzeug ausgesendeten Strahlung als elektrisches Signal vorliegt und diese Richtung durch Übersendung im Datentelegramm der Feststation ebenfalls als elektrisches Signal im Mobilfunkgerät vorliegt und die daraus resultierende optimale azimutale Hauptempfangsrichtung in Relation zur Fahrzeugausrichtung im Prozessor zur Nachführung der Hauptempfangsrichtung (7) aus den im Mobilfunkgerät vorliegenden Richtungsinformationen in Form des Nachführsignals (8) vorliegt.

7. Funktelefonanlage nach Anspruch 1 bis 4
**dadurch gekennzeichnet, daß**
im Mobilfunkgerät eine Empfangspegelmeßeinrichtung (11) zur Feststellung des Empfangspegels vorhanden ist und im Prozessor zur Nachführung der
Hauptempfangsrichtung (7) eine Regeleinrichtung (17) vorhanden ist, durch welche die Hauptempfangsrichtung derart eingestellt ist, daß der über eine Fahrstrecke von einigen Wellenlängen gemittelte Empfangspegel möglichst groß ist.

8. Funktelefonanlage nach Anspruch 1 bis 7
**dadurch gekennzeichnet, daß**
im Prozessor zur Nachführung der Hauptempfangsrichtung (7) ein Zeitglied (10) vorhanden ist, welches bei Verschwinden des Nachführsignals (8) nach Ablauf einer geeignet eingestellten Wartezeit bewirkt, daß die steuerbaren Phasen- bzw. / und Amplituden-Stellglieder (3) durch den Prozessor zur Nachführung der Hauptempfangsrichtung (7) derart eingestellt sind, daß die Strahlungscharakteristik der Gruppenantennenanlage (1) auf dem Fahrzeug eine bestmögliche azimutale Rundstrahlung und möglichst eine Bündelung der Strahlung in vertikaler Richtung zugunsten kleiner Elevationswinkel aufweist (Fig. 2).

9. Funktelefonanlage nach Anspruch 1 bis 7
**dadurch gekennzeichnet, daß**
während des Aufbaus der Funkverbindung mit der Feststation vor dem Vorliegen des Nachführsignals (8) die steuerbaren Phasen- bzw. / und Amplituden-Stellglieder (3) durch den Prozessor zur Nachführung der Hauptempfangsrichtung (7) derart eingestellt sind, daß die Strahlungscharakteristik der Gruppenantennenanlage (1) auf dem Fahrzeug eine bestmögliche azimutale Rundstrahlung und möglichst eine Bündelung der Strahlung in vertikaler Richtung zugunsten kleiner Elevationswinkel aufweist.

10. Funktelefonanlage nach Anspruch 1 bis 9
**dadurch gekennzeichnet, daß**
die Phasen- bzw. / und Amplituden-Stellglieder (3) stufenlos einstellbar gestaltet sind und somit die Nachführung der Hauptempfangsrichtung stufenlos bzw. in kleinen Winkelschritten erfolgt.

11. Funktelefonanlage nach Anspruch 1 bis 9
**dadurch gekennzeichnet**, das
die Phasen- bzw. / und Amplituden-Stellglieder (3) in diskreten Stufen einstellbar gestaltet sind derart, daß den einzelnen Stufen sich einander teilweise überdeckende Strahlungscharakteristiken mit angepaßt großen Halbwertsbreiten mit unterschiedlichen azimutalen Hauptempfangsrichtungen zugeordnet sind und der gesamte Azimut durch die Nachführung der Hauptempfangsrichtung durch Anwahl der Hauptempfangsrichtung mit maximalem Empfangspegel abgedeckt ist.

12. Funktelefonanlage nach Anspruch 1 bis 11
**dadurch gekennzeichnet, daß**
die Phasen- bzw. / und Amplituden-Stellglieder (3) als Kombination von fest eingestellten Phasenschiebern bzw. / und Amplitudengliedern hergestellt sind, welche über Phasen- bzw. /und Amplitudenschalter (12) über den Schaltstellungsprozesser (6) derart verschaltet sind, daß durch eine definierte Kombination von Schaltstellungen eine Strahlungscharakteristik mit einer zugehörigen azimutalen Hauptempfangsrichtung gegeben ist (Fig. 3).

13. Funktelefonanlage nach Anspruch 1 bis 11
**dadurch gekennzeichnet, daß**
eine Stoppeinrichtung (13) vorhanden ist, welche während der Empfangsperioden bei Abweichung der Kombination der Schaltstellungen der steuerbaren Schaltelemente (4) von der Nachführschaltstellungskombination (18) der durch den Diversityprozessor (9) festgestellten Empfangsstörungen und ggf. während der Sendeperioden im Prozessor zur Nachführung der Hauptempfangsrichtung (7) die Regeleinrichtung anhält und das zuletzt aufgetretene Nachführsignal (8) in einen Speicher (15) schreibt, so daß die zuletzt eingestellte Hauptempfangsrichtung jeweils während der Zeit eingestellt bleibt, in der die Nachführschaltstellungskombination (18) nicht vorliegt.

14. Funktelefonanlage für Mobilfunksysteme mit vertikaler Polarisation nach Anspruch 1 bis 13
**dadurch gekennzeichnet; daß**
die Antennenelemente (5) als elektrisch kurze Stabstrahler ausgebildet sind, welche eine im wesentlichen vertikale Orientierung besitzen und vorzugsweise auf dem Fahrzeugdach bzw. auf dem Rückfenster in der Nähe der hinteren Dachkante eines Personenkraftwagens angebracht sind.

15. Funktelefonanlage nach Anspruch 1 bis 14
**dadurch gekennzeichnet, daß**
die Gruppenantennenanlage (1) als Baueinheit ausgeführt ist, in der die Antennenelemente (5), die Phasen- bzw. / und Amplituden- Stellglieder (3), die Phasen- bzw. / und Amplitudenschalter (12) und die steuerbaren Schaltelemente (4) und ein Schaltstellungsprozessor (6) zur Ansteuerung der Phasen- bzw. / und Amplituden- Stellglieder (3), der Phasen-bzw. / und Amplitudenschalter (12) sowie der steuerbaren Schaltelemente (4) vorhanden ist und eine Steuerleitung (16) zwischen dem Mobilfunkgerät (2) und der Gruppenantennenanlage (1) zur Weiterleitung der Ausgangssignale des im Mobilfunkgerät (2) befindlichen Prozessors zur Nachführung der Hauptempfangsrichtung (7) und des Diversityprozessors (9) vorhanden ist (Fig. 4a).

16. Funktelefonanlage nach Anspruch 1 bis 15
**dadurch gekennzeichnet, daß**
der Diversityprozessor (9) derart gestaltet ist, daß das Kriterium zur Erkennung einer Empfangsstörung in der Überschreitung einer zulässigen Bitfehlerrate gegeben ist.

17. Funktelefonanlage für Mobilfunksysteme mit Frequenzmodulation nach Anspruch 1 bis 15
**dadurch gekennzeichnet, daß**
der Diversityprozessor (9) derart gestaltet ist, daß das Kriterium zur Erkennung einer Empfangsstörung in der Überschreitung eines zulässigen Störfrequenzhubs gegeben ist.

18. Funktelefonanlage für Mobilfunksysteme mit Frequenzmodulation nach Anspruch 1 bis 15
**dadurch gekennzeichnet, daß**
der Diversityprozessor (9) derart gestaltet ist, daß das Kriterium zur Erkennung einer Empfangsstörung in der Überschreitung eines zulässigen Störfrequenzhubs in Verbindung mit
der simultan auftretenden Überschreitung eines zulässigen störungsbedingten Amplitudenhubs gegeben ist.

## Claims

1. Radio telephone equipment for vehicles with a group antenna device (1) with several antenna elements (5) and a mobile radio device (2) with a high frequency input (14),
**characterised in that**
controllable phase and/or amplitude actuators (3) are provided for the reception of radio signals in the group antenna device (1) and are adjusted in such a way that directional reception is provided with a main reception direction and is controlled by a processor for tracking the main reception direction (7) in azimuth in the direction of a base transceiver station with the aid of a tracking signal (8) and that controllable switching elements (4) for switching antenna signals for diversity reception are introduced in the signal path of the group antenna (1) in such a way that in a defined tracking switch setting combination (18) of the switch positions of the controllable switch elements (4) the tracking of the main reception direction in azimuth is given, but that with a change in the switch positions of the controllable switch elements (4) the antenna properties are altered and in each case an altered reception signal is present at the high frequency input (14) of the mobile radio device (2) and a diversity processor (9) with rapid reaction time is present which, on recognising a reception interference, selects another of the possible switch position combinations.

2. Radio telephone equipment in accordance with claim 1 for mobile radio systems with time duplex system,
**characterised in that**
during the transmission periods of the mobile telephone equipment the controllable switching elements (4) each take a defined switch position and the phase and/or amplitude actuators (3) of the group antenna equipment (1) are adjusted in such a way that the best possible antenna pattern is achieved in relation to the radio connection with the base transceiver station and the switching from transmission to reception operation and vice versa is provided through the switching signal present in the mobile radio device.

3. Radio telephone equipment in accordance with claim 2 for mobile radio systems with time duplex system,
**characterised in that**
during the transmission period of the mobile telephone equipment the controllable switching element (4) and the phase and/or amplitude actuators (3) of the group antenna equipment (1) are set in such a way that an antenna pattern is formed at the transmission frequency of the mobile radio telephone, the main transmission direction of which is identical to that of the main reception direction at the reception frequency during the reception period.

4. Radio telephone equipment in accordance with claims 1 to 3 for mobile radio systems with time duplex system,
**characterised in that**
in the case where the transmission and reception frequencies are the same, the setting of the controllable switching element (4) and the setting of the phase and/or amplitude actuators (3) during the transmission and reception periods is the same.

5. Radio telephone equipment in accordance with claims 1 to 4,
**characterised in that**
a device is present in the vehicle with the aid of which the geographical position and the alignment of the vehicle in the form of the astronomical horizon coordinates is present as an electrical signal in the mobile radio device and the geographical position of the base transceiver station is likewise available in the mobile radio device through transmission in the data telegram of the base transceiver station, likewise as an electrical signal, and the resulting optimal main reception direction in azimuth in relation to the vehicle alignment is present in the processor in the form of the tracking signal (8) for tracking the main reception direction (7) from the direction of the range vector between the position of the base transceiver station and the vehicle and the vehicle alignment.

6. Radio telephone equipment in accordance with claims 1 to 4,
**characterised in that**
a device is present in the vehicle with the aid of which the alignment of the vehicle is present as an electrical signal in the mobile radio device in the form of the astronomical horizon coordinates and a facility is present in the form of an electrical signal in the base transceiver station for finding the direction of the azimuth of the incident direction of the beam sent out by the vehicle and this direction is also present in the mobile radio device through the transmission in the data telegram of the base transceiver station, likewise as an electrical signal, and the optimal main reception direction (7) in azimuth in relation to the vehicle alignment is present in the processor for the tracking of the main reception direction (7) from the directional information present in the mobile radio in the form of the tracking signal (8).

7. Radio telephone equipment in accordance with claims 1 to 4,
**characterised in that**
a reception level meter (11) for establishing the reception level is present in the mobile radio device and a control unit (17) is present in the processor for tracking the main reception direction (7) by means of which the main reception direction is set in such a way that the reception level determined over a length of travel of a few wave lengths is as great as possible.

8. Radio telephone equipment in accordance with claims 1 to 7,
**characterised in that**
a time-function element (10) is provided in the processor for tracking the main reception direction (7) which, on the fading of the tracking signal (8) after the expiry of a suitable pre-set waiting time, causes the controllable phase and/or amplitude actuators (3) to be set by the processor for the tracking of the main reception direction (7) in such a way that the beam characteristics of the group antenna equipment (1) on the vehicle exhibit the best possible omnidirectional properties in azimuth and if possible have a collimation of the radiation in the vertical direction favouring small angles of elevation (Fig. 2).

9. Radio telephone equipment in accordance with claims 1 to 7,
**characterised in that**
during the establishment of the radio connection with the base transceiver station before the tracking signal (8) is available, the controllable phase and/or amplitude actuators (3) are adjusted by the processor for tracking the main reception direction (7) in such a way that the radiation characteristics of the group antenna equipment (1) on the vehicle have the best possible omnidirectional properties in azimuth and if possible have a collimation of the radiation in the vertical direction favouring small angles of elevation.

10. Radio telephone equipment in accordance with claims 1 to 9,
**characterised in that**
the phase and/or amplitude actuators (3) are continuously adjustable and thus the tracking of the main reception direction is carried out continuously or in small angular steps.

11. Radio telephone equipment in accordance with claims 1 to 9,
**characterised in that**
the phase and/or amplitude actuators (3) are made to be adjustable in discrete steps in such a way that the individual steps are arranged with partially overlapping radiation characteristics with matched half-width sizes with different main reception directions in azimuth and the whole azimuth is covered by the tracking of the main reception direction by selection of the main reception direction with maximal reception level.

12. Radio telephone equipment in accordance with claims 1 to 11,
**characterised in that**
the phase and/or amplitude actuators (3) are made as a combination of fixed set phase shifters and/or amplitude splitters, which are switched by means of phase and/or amplitude switches (12) through the switch positioning processor (6) in such a way that a beam characteristic with an appropriate main reception direction is provided by a defined combination of switch positions (Fig. 3).

13. Radio telephone equipment in accordance with claims 1 to 11,
**characterised in that**
a stop device (13) is provided which stops the control unit during the reception periods in the case of divergence of the combination of the switch positions of the controllable switching elements (4) from the tracking switch setting combination (18) of the reception interferences determined by the diversity processor (9) and optionally during the transmission periods in the processor for the tracking of the main reception direction (7) and writes the last tracking signal (8) obtained to a memory (15), so that the latest main reception direction to be set remains set during the period in which the tracking switch setting combination (18) is not available.

14. Radio telephone equipment for mobile radio systems with vertical polarisation in accordance with claims 1 to 13,
**characterised in that**
the antenna elements (5) are formed as electrically short polyrod antennae which have an essentially vertical orientation and are preferably attached to the vehicle roof or to the rear window in proximity to the rear edge of the roof of a private car.

15. Radio telephone equipment in accordance with claims 1 to 14,
**characterised in that**
the group antenna equipment (1) is produced as a unit in which the antenna elements (5), the phase and/or amplitude actuators (3), the phase and/or amplitude switches (12) and the controllable switching elements (4) and a switch position processor (6) for controlling the phase and/or amplitude actuators (3), the phase and/or amplitude switches (12) and the controllable switching units (4) are present and a control lead (16) is provided between the mobile radio device (2) and the group antenna equipment (1) to conduct the output signals from the processor for tracking the main reception direction (7) located in the mobile radio device (2) and the diversity processor (9) (Fig. 4a).

16. Radio telephone equipment in accordance with claims 1 to 15,
**characterised in that**
the diversity processor (9) is designed in such a way that the criterion for recognising a reception interference is that it exceeds a permissible bit error rate.

17. Radio telephone equipment for mobile radio systems with frequency modulation in accordance with claims 1 to 15,
**characterised in that**
the diversity processor (9) is designed in such a way that the criterion for recognising a reception interference is that it exceeds a permissible increase in interference frequency.

18. Radio telephone equipment for mobile radio systems with frequency modulation in accordance with claims 1 to 15,
**characterised in that**
the diversity processor (9) is designed in such a way that the criterion for recognising a reception interference is that it exceeds a permissible increase in interference frequency while simultaneously exceeding a permissible increase in frequency brought about by interference.

## Revendications

1. Système radiotéléphonique pour véhicules avec un réseau d'antennes (1) comprenant plusieurs éléments d'antennes (5) et un radiotéléphone mobile (2) avec une entrée à haute fréquence (14),
**caractérisé en ce que**,
pour la réception de signaux radio, des éléments de réglage de phase et/ou d'amplitude commandés (3) sont présents dans le réseau d'antennes (1) et réglés de telle manière qu'une réception dirigée avec un sens de réception principal est assurée, et ils sont commandés par un processeur pour le suivi du sens de réception principal (7) de manière azimutale dans la direction de la station de base à l'aide d'un signal de suivi (8), et **en ce que** des éléments de commutation commandés (4) pour la commutation des signaux d'antennes pour la réception diversité sont installés sur les trajets des signaux du réseau d'antennes (1) de telle manière que le suivi du sens de réception principal azimutal est assuré dans une combinaison définie des positions de commutation du suivi (18) des positions de commutation des éléments de commutation commandés (4), **en ce que**, néanmoins, les propriétés des antennes sont modifiées lorsque les positions de commutation des éléments de commutation commandés (4) sont modifiées et un signal de réception modifié est présent à l'entrée à haute fréquence (14) du radiotéléphone mobile (2) et un processeur de diversité (9) ayant un court temps de réaction est présent, qui, en cas de détection d'une perturbation de réception, sélectionne une autre des combinaisons possibles des positions de commutation.

2. Système radiotéléphonique selon la revendication 1 pour systèmes radiotéléphoniques mobiles avec procédé de duplexage par répartition dans le temps, **caractérisé en ce que**,
pendant les périodes d'émission du système radiotéléphonique mobile, les éléments de commutation commandés (4) prennent chacun une position de commutation définie et un réglage des éléments de réglage de phase et/ou d'amplitude (3) du réseau d'antennes (1) est réalisé de telle manière que l'on obtient un diagramme de rayonnement le plus avantageux possible par rapport à la liaison radio avec la station de base et la commutation entre l'émission et la réception, et inversement, est assurée par les signaux de commutation présents dans le radiotéléphone mobile.

3. Système radiotéléphonique selon la revendication 2 pour systèmes radiotéléphoniques mobiles avec procédé de duplexage par répartition dans le temps, **caractérisé en ce que**,
pendant les périodes d'émission du système radiotéléphonique mobile, un réglage des éléments de commutation commandés (4) et le réglage des éléments de réglage de phase et/ou d'amplitude (3) du réseau d'antennes (1) sont réalisés de telle manière que l'on obtient un diagramme de rayonnement sur la fréquence d'émission du radiotéléphone mobile dont le sens d'émission principal est identique au sens de réception principal sur la fréquence de réception pendant les périodes de réception.

4. Système radiotéléphonique selon l'une des revendications 1 à 3 pour systèmes radiotéléphoniques mobiles avec procédé de duplexage par répartition dans le temps, **caractérisé en ce que**,
lorsque la fréquence d'émission et la fréquence de réception sont identiques, le réglage des éléments de commutation commandés (4) et le réglage des éléments de réglage de phase et/ou d'amplitude (3) sont les mêmes pendant les périodes d'émission et de réception.

5. Système radiotéléphonique selon l'une des revendications 1 à 4, **caractérisé en ce que**,
un dispositif est prévu dans le véhicule, à l'aide duquel on obtient la position géographique et l'orientation du véhicule sous forme des cordonnées astronomiques d'horizon comme signal électrique dans le radiotéléphone mobile et la position géographique de la station de base par la transmission dans le télégramme de données de la station de base également comme signal électrique dans le radiotéléphone mobile et le sens de réception principal azimutal optimal qui en résulte par rapport à l'orientation du véhicule est présent dans le processeur pour le suivi du sens de réception principal (7) à partir du sens du vecteur de distance entre les positions de la station de base et le véhicule et de l'orientation du véhicule sous forme du signal de suivi (8).

6. Système radiotéléphonique selon les revendications 1 à 4,
**caractérisé en ce que**,
un dispositif est prévu dans le véhicule, à l'aide duquel on obtient l'orientation du véhicule sous forme des cordonnées astronomiques d'horizon comme signal électrique dans le radiotéléphone mobile, et un dispositif est présent dans la station de base pour le repérage du sens d'incidence azimutal du rayonnement émis par le véhicule comme signal électrique et ce sens est également présent comme signal électrique dans le radiotéléphone mobile par la transmission dans le télégramme de données de la station de base et le sens de réception principal azimutal optimal qui en résulte par rapport à l'orientation du véhicule est présent dans le processeur pour le suivi du sens de réception principal (7) à partir des informations sur le sens présentes dans le radiotéléphone mobile sous forme du signal de suivi (8).

7. Système radiotéléphonique selon l'une des revendications 1 à 4, **caractérisé en ce que**,
un dispositif de mesure du niveau de réception (11) est prévu dans le radiotéléphone mobile pour la détermination du niveau de réception et un dispositif de réglage (17) est prévu dans le processeur pour le suivi du sens de réception principal (7), avec lequel le sens de réception principal est réglé de manière que le niveau de réception moyenné sur un parcours de quelques longueurs d'onde soit le plus élevée possible.

8. Système radiotéléphonique selon l'une des revendications 1 à 7, **caractérisé en ce que**,
un élément de temporisation (10) est prévu dans le processeur pour le suivi du sens de réception principal (7), qui, lorsque le signal de suivi (8) disparaît, après écoulement d'un temps d'attente réglé de manière appropriée, déclenche le réglage des éléments de réglage de phase et/ou d'amplitude (3) par le processeur pour le suivi du sens de réception principal (7) de telle manière que la caractéristique de rayonnement du réseau d'antennes (1) sur le véhicule présente un rayonnement omnidirectionnel azimutal le meilleur possible et, si possible, une concentration du rayonnement dans le sens vertical au profit d'angles d'élévation réduits (figure 2).

9. Système radiotéléphonique selon l'une des revendications 1 à 7, **caractérisé en ce que**,
pendant l'établissement de la liaison radio avec la station de base avant l'apparition du signal de suivi (8), les éléments de réglage de phase et/ou d'amplitude (3) sont réglés par le processeur pour le suivi du sens de réception principal (7) de telle manière que la caractéristique de rayonnement du réseau d'antennes (1) sur le véhicule présente un rayonnement omnidirectionnel azimutal le meilleur possible et, si possible, une concentration du rayonnement dans le sens vertical au profit d'angles d'élévation réduits.

10. Système radiotéléphonique selon les revendications 1 à 9,
**caractérisé en ce que**,
les éléments de réglage de phase et/ou d'amplitude (3) sont réglables progressivement et ainsi, le suivi du sens de réception principal se fait progressivement ou avec de petits incréments angulaires.

11. Système radiotéléphonique selon l'une des revendications 1 à 9, **caractérisé en ce que**,
les éléments de réglage de phase et/ou d'amplitude (3) sont réglables par paliers discrets de telle sorte que des caractéristiques de rayonnement se chevauchant partiellement avec des largeurs à demi-puissance importantes adaptées avec différents sens de réception principaux azimutaux sont associées aux paliers individuels et l'azimut complet est couvert par le suivi du sens de réception principal par la sélection du sens de réception principal avec un niveau de réception maximal.

12. Système radiotéléphonique selon l'une des revendications 1 à 11, **caractérisé en ce que**,
les éléments de réglage de phase et/ou d'amplitude (3) sont constitués sous forme d'une combinaison de déphaseurs et/ou d'éléments d'amplitude réglés fixement qui sont commutés par l'intermédiaire de commutateurs de phase et/ou d'amplitude (12) par le commutateur de positions de commutation (6) de telle sorte que l'on obtient une caractéristique de rayonnement avec un sens de réception principal azimutal correspondant grâce à une combinaison définie de positions de commutation (figure 3).

13. Système radiotéléphonique selon l'une des revendications 1 à 11, **caractérisé en ce que**,
il est prévu un dispositif d'arrêt (13) qui, pendant les périodes de réception, en cas d'écart entre la combinaison des positions de commutation des éléments de commutation commandés (4) et la combinaison des positions de commutation du suivi (18) des perturbations de réception déterminées par le processeur de diversité (9) et, éventuellement, pendant les périodes d'émission, maintient le dispositif de réglage dans le processeur pour le suivi du sens de réception principal (7) et enregistre dans une mémoire (15) le dernier signal de suivi produit (8), de sorte que le sens de réception principal réglé en dernier reste réglé pendant la période pendant laquelle la combinaison des positions de commutation du suivi (18) n'est pas présente.

14. Système radiotéléphonique pour systèmes radiotéléphoniques mobiles avec polarisation verticale selon l'une des revendications 1 à 13, **caractérisé en ce que**,
les éléments d'antennes (5) sont configurés comme des antennes à tiges électriques courtes qui présentent une orientation sensiblement verticale et qui sont montées, de préférence, sur le toit du véhicule ou sur la vitre arrière à proximité de la bordure du toit arrière d'une voiture particulière.

15. Système radiotéléphonique selon l'une des revendications 1 à 14, **caractérisé en ce que**,
le réseau d'antennes (1) est réalisé sous forme d'une unité modulaire dans laquelle se trouvent les éléments d'antennes (5), les éléments de réglage de phase et/ou d'amplitude commandés (3), les commutateurs de phase et/ou d'amplitude (12) et les éléments de commutation commandés (4) et un commutateur de positions de commutation (6) pour la commande des éléments de réglage de phase et/ou d'amplitude commandés (3), des commutateurs de phase et/ou d'amplitude (12) et des éléments de commutation commandés (4), et une ligne de commande (16) est prévue entre le radiotéléphone mobile (2) et le réseau d'antennes (1) pour la retransmission des signaux de sortie du processeur se trouvant dans le radiotéléphone mobile (2) pour le suivi du sens de réception principal (7) et du processeur de diversité (9) (figure 4a).

16. Système radiotéléphonique selon l'une des revendications 1 à 15, **caractérisé en ce que**,
le processeur de diversité (9) est configuré de telle manière que le critère pour la reconnaissance d'une perturbation de réception est indiqué par le dépassement d'un taux d'erreur sur les éléments binaires acceptable.

17. Système radiotéléphonique pour systèmes radiotéléphoniques mobiles avec modulation de fréquence selon les revendications 1 à 15, **caractérisé en ce que**,
le processeur de diversité (9) est configuré de telle manière que le critère pour la reconnaissance d'une perturbation de réception est indiqué par le dépassement d'une déviation de fréquence perturbatrice acceptable.

18. Système radiotéléphonique pour systèmes radiotéléphoniques mobiles avec modulation de fréquence selon les revendications 1 à 15, **caractérisé en ce que**,
le processeur diversité (9) est configuré de telle manière que le critère pour la reconnaissance d'une perturbation de réception est indiqué par le dépassement d'une déviation de fréquence perturbatrice acceptable en liaison avec le dépassement simultané d'une déviation d'amplitude acceptable provoquée par la perturbation.
